# EUROPEAN PATENT APPLICATION

(11) **EP 3 501 450 A1**
(43) Date of publication of application: **26.06.2019**
(21) Application number: 18212203.6
(22) Date of filing: 13.12.2018
(51) Int. Cl.: A61C 13/08, A61C 13/00

(54) **DENTAL PROTHESIS PRODUCTION DEVICE**

(30) Priority: 20.12.2017 JP 2017244195
(71) Applicant: DGSHAPE Corporation, Hamamatsu-shi, Shizuoka 431-2103 (JP)
(72) Inventor: NAKANE, Kenta, Hamamatsu-shi, Shizuoka, 431-2103 (JP); SATO, Ryo, Hamamatsu-shi, Shizuoka, 4312103 (JP)
(74) Representative: Grünecker Patent- und Rechtsanwälte PartG mbB

(57) **Abstract**

A dental prosthesis production device alleviating a working load on an operator detaching a processing target is provided. A production device 10 includes a blower nozzle 36 that is located above a rotation and holding member 60 and transmits compressed air to the rotation and holding member 60 and a holding tool 8 holding a processing target 5. The rotation and holding member 60 includes a holder main body 61 that holds the holding tool 8; and a first securing mechanism 64 and a second securing mechanism 65 that are manually operable and secure the holding tool 8 to a holder main body 61. The blower nozzle 36 transmits the compressed air to the first securing mechanism 64 and the second securing mechanism 65.

## Description

### Field of the Invention

The present invention relates to a dental prosthesis production device producing a dental prosthesis having a shape of a dental crown.

### Description of the Related Art

Conventionally, a dental prosthesis production device that processes a processing target such as a dental ceramic material, a dental resin material or the like into a desired shape to produce a dental prosthesis (also referred to as an "artificial tooth", an "artificial dental crown" or the like) is known. Such a dental prosthesis production device includes a processing tool. The processing tool processes the processing target, for example, cuts and polishes the processing target to produce a dental prosthesis.

The processing target is formed to be, for example, disc-shaped. As described in, for example, Japanese Laid-Open Patent Publication No. 2015-120222, in this type of dental prosthesis production device, the disc-shaped processing target is cut by the processing tool in a state where an arcked portion thereof is held by a rotation and holding member having a generally C shape.

In the rotation and holding member disclosed in Japanese Laid-Open Patent Publication No. 2015-120222, a first holding member holding the processing target from above and a second holding member holding the processing target from below are coupled with each other by a plurality of screws. An operator may rotate the screws by use of a predetermined tool to cause the second holding member to approach, or to be separated from, the first holding member. In this manner, the processing target may be attached between the first holding member and the second holding member or may be detached from the first holding member and the second holding member.

After the production of a dental prosthesis is finished, the processing target is detached from the rotation and holding member. At this point, cutting powder, which is generated by cutting the processing target, may be found to be attached to the screws. Therefore, the operator needs to remove the cutting powder with a brush or the like before loosening the screws to detach the processing target.

The present invention made in light of the above-described point has an object of providing a dental prosthesis production device that alleviates the load on the operator at the time of detaching the processing target.

### SUMMARY OF THE INVENTION

Recently, a dental prosthesis production device has been progressively developed by which a processing target is held by a holding tool, and the holding tool that is holding the processing target is attached to a rotation and holding member. The present inventor has created a dental prosthesis production device that attaches the holding tool to the rotation and holding member by use of a manually operable securing mechanism. However, when the production of a dental prosthesis is finished and the holding tool that is holding the processing target is to be detached from the rotation and holding member, cutting powder may be found to be attached to the securing mechanism, like in the conventional dental prosthesis production device. Since the operator operates the securing mechanism manually, the cutting powder is attached to the hands of the operator if the operator operates the securing mechanism. This requires the cutting powder to be removed by a brush or the like before the securing mechanism is operated, which causes a problem that the load on the operator is large. The present inventor conceived using a blower that transmits compressed air to the securing mechanism to alleviate the load on the operator.

A dental prosthesis production device according to the present invention includes a processing tool that is configured to cut a processing target to produce a dental prosthesis; a spindle that is configured to rotatably support the processing tool and is movable in an XYZ orthogonal coordinate system; a holding tool that is configured to hold the processing target; a rotation and holding member that is configured to detachably hold the holding tool and is rotatable about an X axis; and a blower nozzle that is located above the rotation and holding member and is configured to transmit compressed air to the rotation and holding member and the holding tool. The rotation and holding member includes a holder main body that is configured to hold the holding tool; and a securing mechanism that is manually operable and is configured to secure the holding tool to the holder main body. The blower nozzle is configured to transmit the compressed air to the securing mechanism.

The dental prosthesis production device according to the present invention includes the blower nozzle transmitting the compressed air to the rotation and holding member and the holding tool. The blower nozzle transmits the compressed air to the securing mechanism, which is manually operable, among the components of the rotation and holding member. Therefore, when the production of the dental prosthesis is finished and the holding tool holding the processing target is to be detached from the rotation and holding member, the cutting powder, even if being attached to the securing mechanism of the rotation and holding member, is blown away by the compressed air transmitted from the blower nozzle. In this manner, the cutting powder is removed by the blower nozzle provided in the production device. Therefore, the operator does not need to remove the cutting powder with a brush, which alleviates the working load on the operator. In addition, the cutting powder is suppressed from being attached to the hand of the operator while the operator manually operates the securing mechanism.

According to the present invention, a dental prosthesis production device that alleviates the load on the operator at the time of detaching the processing target is provided.

### BRIEF DESCRIPTION OF THE DRAWINGS

FIG. 1 is a perspective view of a dental prosthesis production device in a preferred embodiment according to the present invention.
FIG. 2 is a front view of the dental prosthesis production device in a preferred embodiment according to the present invention.
FIG. 3 is a cross-sectional view of the dental prosthesis production device in a preferred embodiment according to the present invention.
FIG. 4 is a plan view of a processing target having a holding tool attached thereto in a preferred embodiment according to the present invention.
FIG. 5 is a plan view of a rotation and holding member and a rotation and support member in a preferred embodiment according to the present invention.
FIG. 6 is a plan view of the rotation and holding member and the rotation and support member in a preferred embodiment according to the present invention; more specifically, shows a state where the holding tool is attached to the rotation and holding member.
FIG. 7 is a perspective view of a tool magazine in a preferred embodiment according to the present invention.
FIG. 8 is a perspective view of a movement mechanism in a preferred embodiment according to the present invention.
FIG. 9 is a block diagram of a controller in a preferred embodiment according to the present invention.
FIG. 10 is a perspective view showing a state where a first securing mechanism and a second securing mechanism are located above the rotation and support member.
FIG. 11 is a perspective view showing a state where a grab portion is located above the rotation and support member.

### DETAILED DESCRIPTION OF THE PREFERRED EMBODIMENTS

Hereinafter, preferred embodiments of a dental prosthesis production device according to the present invention will be described with reference to the drawings. The preferred embodiments described herein are not intended to specifically limit the present invention, needless to say. Components and portions that have the same functions will bear the same reference signs, and overlapping descriptions will be omitted or simplified.

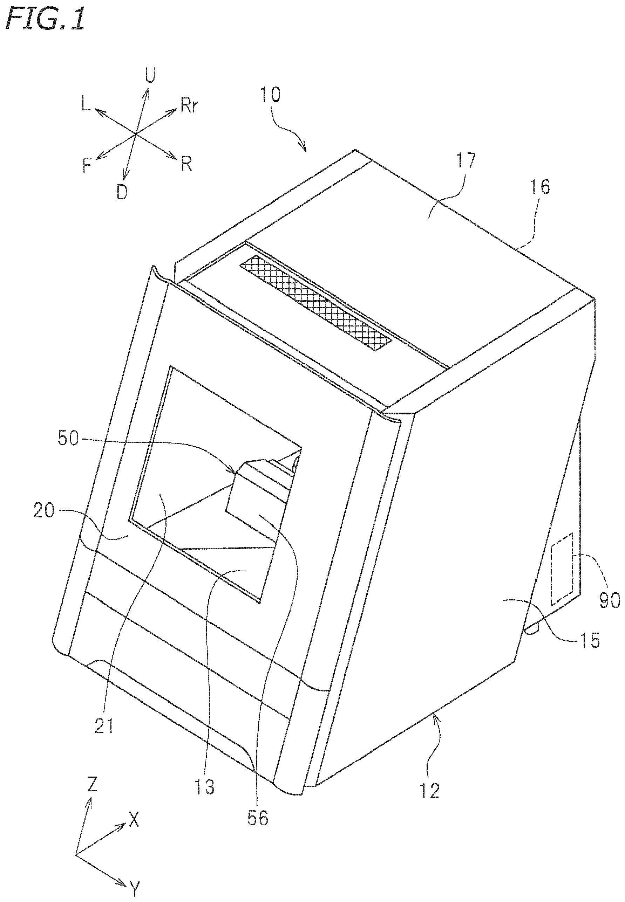

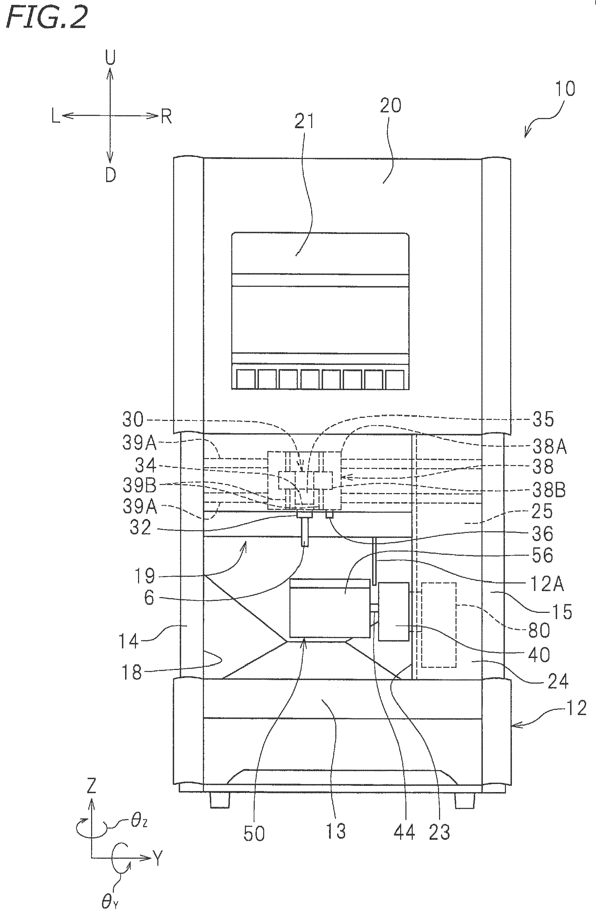

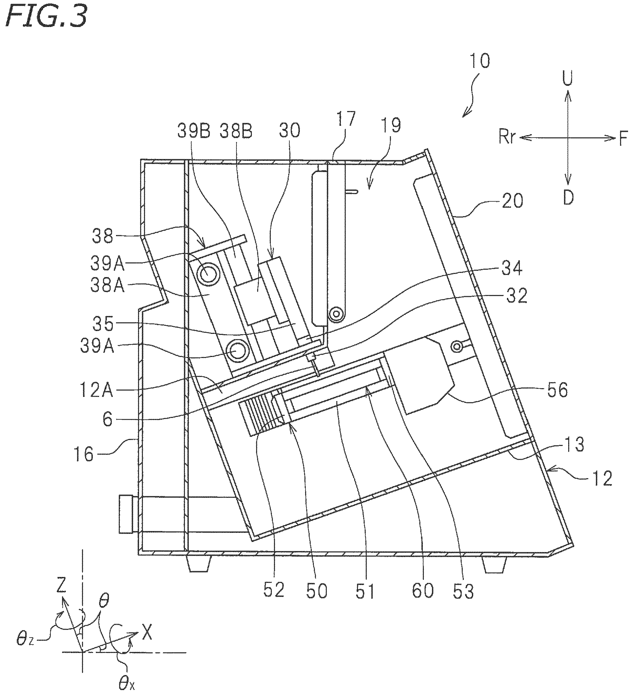

FIG. 1 is a perspective view of a dental prosthesis production device 10 (hereinafter, referred to as the "production device 10"). FIG. 2 is a front view of the production device 10. FIG. 3 is a cross-sectional view of the production device 10. In the drawings, letters F, Rr, L, R, U and D respectively represent front, rear, left, right, up and down. In the following description, the terms "left", "right", "up" and "down respectively represents left, right, up and down for a person facing a front surface of the production device 10. For a person facing the front surface of the production device 10, a direction distanced farther from the production device 10 will be referred to as "forward", and a direction approaching the production device 10 will be referred to as "rearward". In this preferred embodiment, the production device 10 is located in an XYZ orthogonal coordinate system. In this preferred embodiment, an X axis extends in a front-rear direction. As shown in FIG. 3, in this preferred embodiment, the X axis is inclined by θ with respect to a horizontal direction. Alternatively, the X axis may extend in the horizontal direction. A Y axis extends in a left-right direction. A Z axis extends in an up-down direction. As shown in FIG. 3, in this preferred embodiment, the Z axis is inclined by θ with respect to a vertical direction. Alternatively, the Z axis may extend in the vertical direction. Reference signs θ_{X}, θ_{Y} and θ_{Z} respectively represent rotation directions about the X axis, Y axis and Z axis. The above-described directions are merely set for the sake of convenience, and do not limit the form of installation of the production device 10 in any way, or do not limit the present invention in any way.

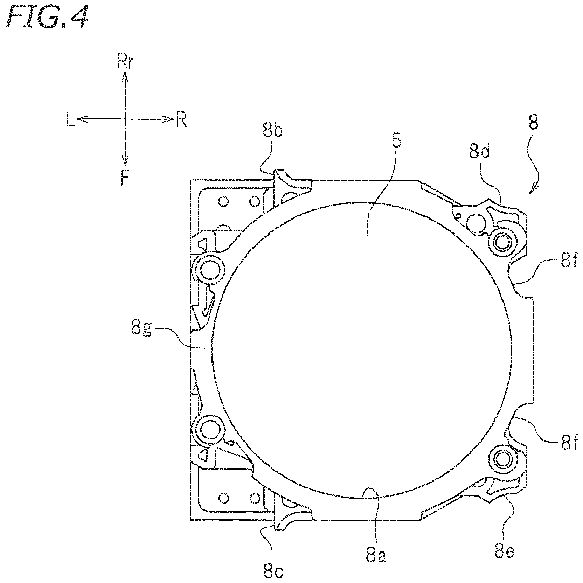

The production device 10 cuts, and polishes when necessary, a processing target 5 (see FIG. 4). The production device 10, for example, cuts the processing target 5 to produce a dental prosthesis. The processing target 5 is, for example, disc-shaped. The processing target 5 may be formed of any of various materials such as zirconia, wax, poly(methyl polymethacrylate) resin (PMMA), hybrid resin, PEEK (poly(etheretherketone) resin), plaster and the like. In the case where zirconia is used as a material of the processing target 5, semi-sintered zirconia, for example, is used. There is no specific limitation on the shape or the material of the processing target 5.

As shown in FIG. 4, in this preferred embodiment, a holding tool 8 is attached to the processing target 5. In the state of having the holding tool 8 attached thereto, the processing target 5 is put into the production device 10 and cut. In this preferred embodiment, the holding tool 8 includes a through-hole 8a at a central thereof. The processing target 5 is inserted into the through-hole 8a to be attached to the holding tool 8. The holding tool 8 holds the processing target 5.

As shown in FIG. 4, the holding tool 8 includes a first locking protrusion 8b protruding rearward from the holding tool 8. The first locking protrusion 8b is formed in a rear left portion of the holding tool 8. The holding tool 8 includes a second locking protrusion 8c protruding forward from the holding tool 8. The second locking protrusion 8c is formed in a front left portion of the holding tool 8. The holding tool 8 includes a first press groove 8d formed in a rear right portion thereof. The first press groove 8d is recessed forward from a rear surface of the holding tool 8. The holding tool 8 includes a second press groove 8e formed in a front right portion thereof. The second press groove 8e is recessed rearward from a front surface of the holding tool 8. The holding tool 8 includes two positioning grooves 8f formed at a right end thereof. The two positioning grooves 8f are recessed leftward from a right surface of the holding tool 8. The holding tool 8 includes a grab portion 8g to be grabbed by a hand of an operator. The grab portion 8g is provided in a left end portion thereof. The operator grabs the grab portion 8g when detaching the holding tool 8 from a rotation and holding member 60 described below.

As shown in FIG. 1, the production device 10 is box-shaped. The production device 10 includes a case main body 12, a front cover 20, and a controller 90. The case main body 12 includes a base 13, a left wall 14 (see FIG. 2), a right wall 15, a rear wall 16 (see also FIG. 3), a top wall 17, a partition wall 23 (see FIG. 2), and a cover 24 (see FIG. 2). The left wall 14 extends upward from a left end of the base 13. The right wall 15 extends upward from a right end of the base 13. The partition wall 23 is located to the left of the right wall 15, and extends upward from the base 13. The rear wall 16 extends upward from a rear end of the base 13. A left end of the rear wall 16 is connected with a rear end of the left wall 14, and a right end of the rear wall 16 is connected with a rear end of the right wall 15. A rear end of the partition wall 23 is connected with the rear wall 16. The top wall 17 is connected with top ends of the left wall 14, the right wall 15, the partition wall 23 and the rear wall 16. The case main body 12 includes a front opening. In this preferred embodiment, an opening 18 (see FIG. 2) is defined by the base 13, the left wall 14, the partition wall 23 and the top wall 17. The production device 10 includes an inner space 19 (see FIG. 2) enclosed by the base 13, the left wall 14, the partition wall 23, the rear wall 16, the top wall 17 and the front cover 20. The inner space 19 is a processing area where the disc-shaped processing target 5 is to be cut. The production device 10 includes an accommodation space 25 (see FIG. 2) enclosed by the base 13, the partition wall 23, the right wall 15, the rear wall 16, the top wall 17 and the cover 24. The accommodation space 25 accommodates a movement mechanism 80 described below. The cover 24 is detachable from the partition wall 23 and the right wall 15. The controller 90 is located in the case main body 12.

The front cover 20 is movable in the up-down direction along a front end of the left wall 14 and a front end of the right wall 15 to be opened or closed. FIG. 2 shows a state where the front cover 20 has moved upward to allow the inner space 19 to be in communication with the outside. The front cover 20 includes a window 21. The window 21 is formed of, for example, a transparent acrylic plate. The operator may visually recognize the inner space 19 through the window 21.

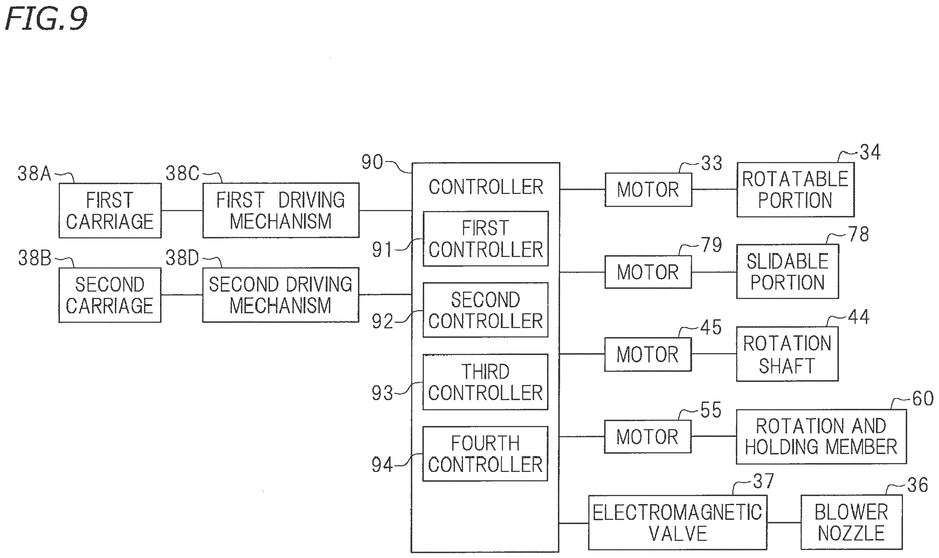

As shown in FIG. 2, the production device 10 includes a spindle 30 and a carriage 38. The carriage 38 has the spindle 30 and a blower nozzle 36 described below mounted thereon. The carriage 38 is movable in a Z-axis direction and a Y-axis direction. The carriage 38 includes a first carriage 38A and a second carriage 38B. The first carriage 38A is supported by a pair of first guide shafts 39A extending in the Y-axis direction. The first carriage 38A is movable in the Y-axis direction along the first guide shafts 39A by a first driving mechanism 38C (see FIG. 9). The first guide shafts 39A are provided in the inner space 19. Left ends of the first guide shafts 39A are connected with the left wall 14. Right ends of the first guide shafts 39A run through the partition wall 23 and are connected with the right wall 15. The second carriage 38B is supported by a pair of second guide shafts 39B extending in the Z-axis direction. The second carriage 38B is movable in the Z-axis direction along the second guide shafts 39B by a second driving mechanism 38D (see FIG. 9). The second guide shafts 39B are provided on the first carriage 38A. Therefore, when the first carriage 38A moves in the Y-axis direction, the second carriage 39B also moves in the Y-axis direction. The first driving mechanism 38C and the second driving mechanism 38D are controlled by the controller 90.

The spindle 30 is provided on the second carriage 38B. The spindle 30 is movable in the XYZ orthogonal coordinate system along with the movement of the carriage 38. In more detail, the spindle 30 is movable in the Z-axis direction along with the movement of the second carriage 38B and is movable in the Y-axis direction along with the movement of the first carriage 38A. The spindle 30 rotatably supports a processing tool 6, which cuts the processing target 5 to produce a dental prosthesis. The spindle 30 is located in the inner space 19. The spindle 30 includes a support portion 32, a rotatable portion 34 and a main body 35. The main body 35 is cylindrical. The rotatable portion 34 is provided at a bottom end of the main body 35. The rotatable portion 34 is rotatable with respect to the main body 35. The support portion 32 is provided at a bottom end of the rotatable portion 34. The support portion 32 is rotatable together with the rotatable portion 34.

The support portion 32 supports (grabs) a top end of the processing tool 6. Although not shown, the support portion 32 includes a plurality of support members arrayed on an XY plane. The plurality of support members hold the top end of the processing tool 6, and thus the support portion 32 supports the processing tool 6.

The rotatable portion 34 rotates the processing tool 6 supported by the support portion 32. The rotatable portion 34 is connected with a motor 33 (see FIG. 9). The motor 33 is controlled by the controller 90. The motor 33 is driven to rotate the rotatable portion 34 in the direction θ_{Z} about the Z axis. Along with the rotation of the rotatable portion 34, the processing tool 6 grabbed by the support portion 32 is rotated in the direction θ_{Z} about the Z axis.

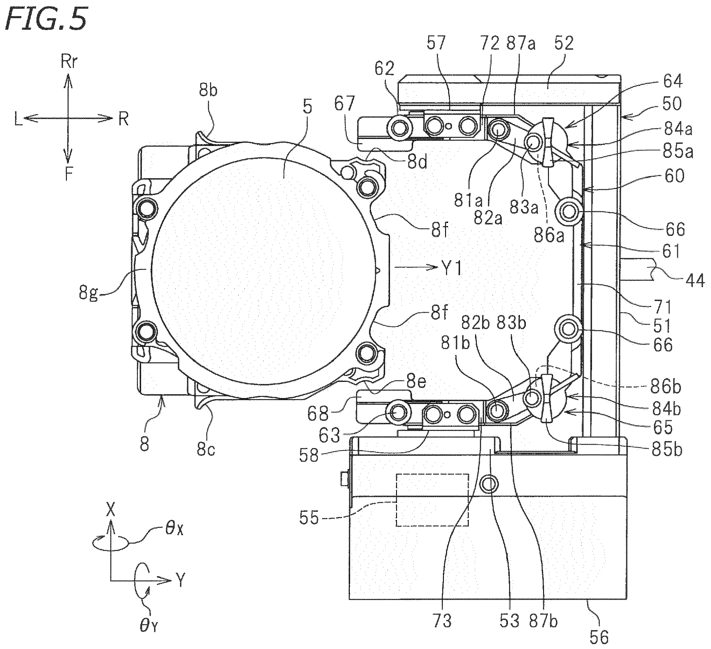

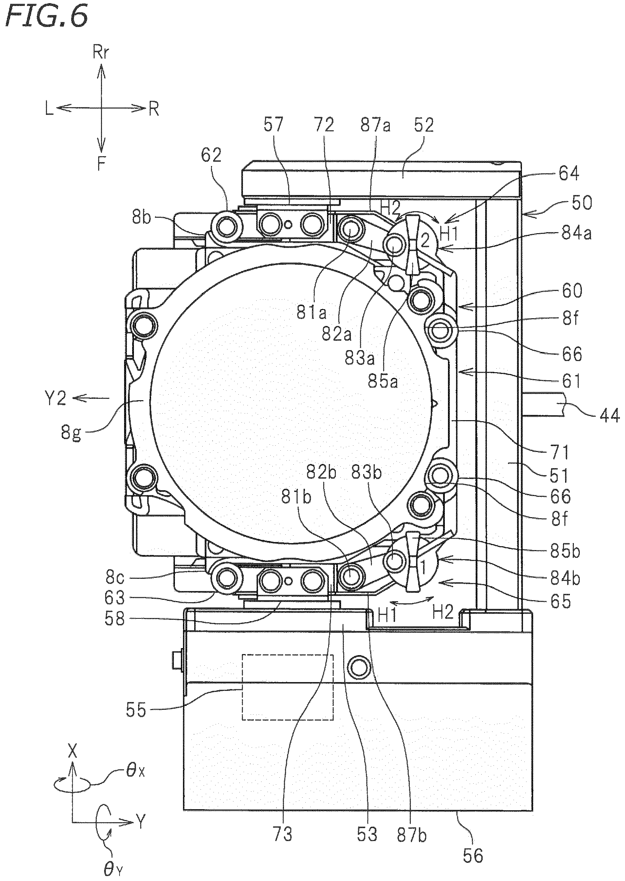

As shown in FIG. 2, the production device 10 includes a tool magazine 40, a rotation and support member 50 (see also FIG. 5), the rotation and holding member 60 (FIG. 6), and the movement mechanism 80. In this preferred embodiment, the tool magazine 40, the rotation and support member 50, and the rotation and holding member 60 are located in the inner space 19. The movement mechanism 80 is located in the accommodation space 25.

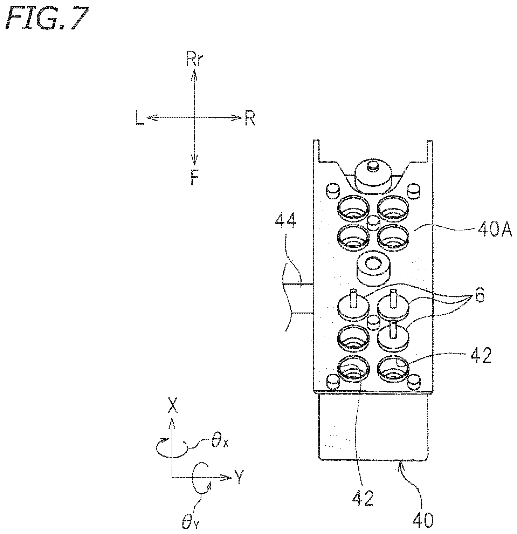

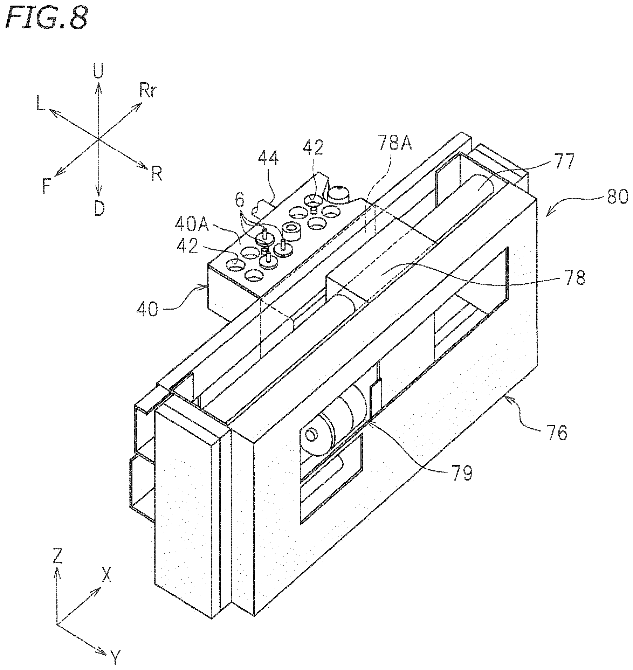

As shown in FIG. 7, the tool magazine 40 may accommodate a plurality of the processing tools 6. The tool magazine 40 is provided between the rotation and support member 50 and the movement mechanism 80. As shown in FIG. 8, the tool magazine 40 is connected with the movement mechanism 80. The tool magazine 40 is movable in the X-axis direction by the movement mechanism 80 moving in the X-axis direction. The tool magazine 40 is box-shaped. The tool magazine 40 includes a plurality of holes 42 in a top surface thereof. The plurality of holes 42 accommodate the processing tools 6. The processing tools 6 are accommodated in the holes 42 while top portions thereof are exposed. The processing tools 6 are exchanged as follows. The processing tool 6 grabbed by the support portion 32 is returned to the hole 42. Then, the spindle 30 is moved to a position above the processing tool 6 to be used next, and a top end of the processing tool 6 below the support portion 32 is grabbed by the support portion 32.

As shown in FIG. 2, the movement mechanism 80 moving the tool magazine 40 in the X-axis direction is provided to the right of the tool magazine 40. As shown in FIG. 8, the movement mechanism 80 includes a main body case 76, a guide shaft 77, a slidable member 78, and a coupling member 78A. The production device 10 includes a motor 79 that moves the movement mechanism 80. The main body case 76 is parallelepiped. The guide shaft 77 extends in the X-axis direction. The guide shaft 77 is located in the main body case 76. The slidable member 78 is supported by the guide shaft 77. The slidable member 78 is movable in the X-axis direction along the guide shaft 77 by the motor 79 being driven. The motor 79 is controlled by the controller 90. The coupling member 78A coupling the tool magazine 40 and the slidable member 78 to each other is provided to the left of the slidable member 78. The motor 79 is an example of second driving source.

As shown in FIG. 7, the tool magazine 40 is provided with a rotation shaft 44 rotatably supporting the rotation and support member 50. The rotation shaft 44 extends in the left-right direction. As shown in FIG. 5, the rotation shaft 44 is coupled with the rotation and support member 50. The tool magazine 40 is provided with a motor 45 (see FIG. 9) rotating the rotation shaft 44 in the direction θ_{Y} about the Y-axis. The motor 45 is controlled by the controller 90. The motor 45 is driven to rotate the rotation shaft 44 in the direction θ_{Y} about the Y-axis. Along with the rotation of the rotation shaft 44, the rotation and support member 50 rotates in the direction θ_{Y} about the Y-axis.

The rotation and support member 50 supports the rotation and holding member 60 such that the rotation and holding member 60 is rotatable in the direction θ_{X} about the X axis. The rotation and support member 50 is generally U-shaped as seen in a plan view. The rotation and support member 50 includes a first portion 51, a second portion 52 and a third portion 53. The first portion 51 extends in the front-rear direction. The first portion 51 is coupled with the rotation shaft 44. The second portion 52 extends leftward from a rear end of the first portion 51. The third portion 53 extends leftward from a front end of the first portion 51. The second portion 52 and the third portion 53 face each other. The rotation and holding member 60 is rotatably supported by a left portion of the second portion 52 and a left portion of the third portion 53. The third portion 53 is provided with a case 56 accommodating a motor 55. The motor 55 rotates the rotation and holding member 60 in the direction θ_{X} about the X axis. The motor 55 is controlled by the controller 90. The motor 55 is an example of first driving source. The rotation and support member 50 is movable in the x-axis direction by the movement mechanism 80 (see FIG. 2) moving in the X-axis direction.

As shown in FIG. 5, the rotation and holding member 60 detachably holds the holding tool 8. The rotation and holding member 60 is rotatable in the direction θ_{X} about the X axis. The rotation and holding member 60 includes a holder main body 61, a first positioning portion 62, a second positioning portion 63, a first securing mechanism 64, a second securing mechanism 65, third positioning portions 66, a first guide portion 67, and a second guide portion 68.

As shown in FIG. 6, the holder main body 61 is generally U-shaped as seen in a plan view. The holder main body 61 holds the holding tool 8. The holder main body 61 includes a first portion 71, a second portion 72 and a third portion 73. The first portion 71 extends in the front-rear direction. The second portion 72 extends leftward from a rear end of the first portion 71. The third portion 73 extends leftward from a front end of the first portion 71. The second portion 72 and the third portion 73 face each other.

As shown in FIG. 6, the second portion 72 is provided with a first rotation shaft 57. The third portion 73 is provided with a second rotation shaft 58. The first rotation shaft 57 is rotatably supported by the second portion 52 of the rotation and support member 50. The second rotation shaft 58 is rotatably supported by the third portion 53 of the rotation and support member 50.

As shown in FIG. 6, the first positioning portion 62 and the second positioning portion 63 have a function of positioning the holding tool 8 with respect to the holder main body 61 of the rotation and holding member 60. The first positioning portion 62 is provided on a top surface of a left portion of the second portion 72. The second positioning portion 63 is provided on a top surface of a left portion of the third portion 73. The first positioning portion 62 and the second positioning portion 63 face each other. When the holding tool 8 is moved in a direction of arrow Y1 in FIG. 5 to be attached to the rotation and holding member 60, the first locking protrusion 8b of the holding tool 8 contacts the first positioning portion 62 whereas the second locking protrusion 8c of the holding tool 8 contacts the second positioning portion 63. As a result, the holding tool 8 is positioned with respect to the holder main body 61 of the rotation and holding member 60.

As shown in FIG. 6, the third positioning portions 66 have a function of positioning the holding tool 8 with respect to the holder main body 61 of the rotation and holding member 60. The third positioning portions 66 are located in the vicinity of the center of the first portion 71. When the holding tool 8 is moved in the direction of arrow Y1 in FIG. 5 to be attached to the rotation and holding member 60, the third positioning portions 66 contact the positioning grooves 8f of the holding tool 8. As a result, the holding tool 8 is positioned with respect to the holder main body 61 of the rotation and holding member 60.

As shown in FIG. 5, the first guide portion 67 and the second guide portion 68 guide the movement of the holding tool 8 when the holding tool 8 is to be attached to the rotation and holding member 60. The first guide portion 67 extends forward from a bottom surface of the left portion of the second portion 72. The second guide portion 68 extends rearward from a bottom surface of the left portion of the third portion 73. The first guide portion 67 and the second guide portion 68 support a bottom surface of the holding tool 8.

The first securing mechanism 64 and the second securing mechanism 65 are manually operable. The first securing mechanism 64 and the second securing mechanism 65 have a function of securing the holding tool 8 to the holder main body 61.

As shown in FIG. 5, the first securing mechanism 64 urges the holding tool 8 toward the second securing mechanism 65. The first securing mechanism 64 is provided to the right of the second portion 72. The first securing mechanism 64 includes a first shaft 81a, a first arm member 82a, a first locking member 84a and a first leaf spring 87a. The first shaft 81a is provided in a region that is on a top surface of the second portion 72 and is to the right of the first positioning portion 62. The first shaft 81a extends upward from the top surface of the second portion 72. The first arm member 82a is rotatable about the first shaft 81a. One of two ends of the first arm member 82a is provided around the first shaft 81a. The other of the two ends of the first arm member 82a is provided with the first locking member 84a via a first locking shaft 83a. The first locking shaft 83a extends upward from the other end of the first arm member 82a. The first locking member 84a is rotatable about the first locking shaft 83a. The first locking member 84a includes a first grab portion 85a to be grabbed by the hand of the operator, and a first press portion 86a to be locked with the first press groove 8d of the holding tool 8. The first leaf spring 87a is provided on the second portion 72. The first leaf spring 87a contacts the first locking member 84a to urge the first locking member 84a toward the holding tool 8. In a state where the holding tool 8 is positioned with respect to the holder main body 61 of the rotation and holding member 60, the operator grabs the first grab portion 85a and manually rotates the first grab portion 85a in a direction of arrow H1 in FIG. 6. As a result, the first press portion 86a is pressed onto, and locked with, the first press groove 8d of the holding tool 8.

As shown in FIG. 5, the second securing mechanism 65 urges the holding tool 8 toward the first securing mechanism 64. The second securing mechanism 65 is provided to the right of the third portion 73. The second securing mechanism 65 includes a second shaft 81 b, a second arm member 82b, a second locking member 84b and a second leaf spring 87b. The second shaft 81b is provided in a region that is on a top surface of the third portion 73 and is to the right of the second positioning portion 63. The second shaft 81 b extends upward from the top surface of the third portion 73. The second arm member 82b is rotatable about the second shaft 81b. One of two ends of the second arm member 82b is provided around the second shaft 81 b. The other of the two ends of the second arm member 82b is provided with the second locking member 84b via a second locking shaft 83b. The second locking shaft 83b extends upward from the other end of the second arm member 82b. The second locking member 84b is rotatable about the second locking shaft 83b. The second locking member 84b includes a second grab portion 85b to be grabbed by the hand of the operator, and a second press portion 86b to be locked with the second press groove 8e of the holding tool 8. The second leaf spring 87b is provided on the third portion 73. The second leaf spring 87b contacts the second locking member 84b to urge the second locking member 84b toward the holding tool 8. In a state where the holding tool 8 is positioned with respect to the holder main body 61 of the rotation and holding member 60, the operator grabs the second grab portion 85b and manually rotates the second grab portion 85b in a direction of arrow H2 in FIG. 6. As a result, the second press portion 86b is pressed onto, and locked with, the second press groove 8e of the holding tool 8. The first securing mechanism 64 and the second securing mechanism 65 merely need to be manually operable to cause the holding tool 8 to be held by the rotation and holding member 60, and are not limited to having the above-described structure.

As described above, the first press portion 86a is pressed onto the first press groove 8d of the holding tool 8, and the second press portion 86b is pressed onto the second press groove 8e of the holding tool 8. Thus, the holding tool 8 is held by the rotation and holding member 60. In a state where the holding tool 8 is held by the rotation and holding member 60, the grab portion 8g of the holding tool 8 is located oppositely to the first securing mechanism 64 and the second securing mechanism 65 with respect to the first rotation shaft 57 and the second rotation shaft 58 of the rotation and holding member 60 in the Y-axis direction. For detaching the holding tool 8 from the rotation and holding member 60, the operator grabs the first grab portion 85a and manually rotates the first grab portion 85a in the direction of arrow H2 in FIG. 6, and also grabs the second grab portion 85b and manually rotates the second grab portion 85b in the direction of arrow H1 in FIG. 6, and then moves the holding tool 8 in a direction of arrow Y2 in FIG. 6 while grabbing the grab portion 8g of the holding tool 8.

As shown in FIG. 2, the production device 10 includes the blower nozzle 36. The blower nozzle 36 is located above the rotation and holding member 60. The blower nozzle 36 is provided on the first carriage 38A. The blower nozzle 36 moves in the XYZ orthogonal coordinate system along with the movement of the carriage 38. In more detail, the blower nozzle 36 moves in the Y-axis direction along with the movement of the first carriage 38A. The blower nozzle 36 transmits compressed air to the rotation and holding member 60 (see FIG. 6) and the holding tool 8 (see FIG. 6). The blower nozzle 36 transmits the compressed air, for example, to the first securing mechanism 64 of the rotation and holding member 60 (e.g., to the first grab portion 85a of the first locking member 84a) and to the second securing mechanism 65 (e.g., to the second grab portion 85b of the second locking member 84b). The blower nozzle 36 transmits the compressed air to, for example, the grab portion 8g of the holding tool 8. The blower nozzle 36 is connected with a compressor (not shown). The compressed air supplied from the compressor is transmitted to the rotation and holding member 60 and the holding tool 8 via the blower nozzle 36. An electromagnetic valve 37 (see FIG. 9) is provided between the compressor and the blower nozzle 36. The electromagnetic valve 37 is controlled by the controller 90 to be opened or closed. When the electromagnetic valve 37 is opened, the compressed air is supplied from the blower nozzle 36. By contrast, when the electromagnetic valve 37 is closed, the compressed air is not supplied from the blower nozzle 36.

As shown in FIG. 2, a partition plate 12A is provided in the case main body 12, more specifically, between the rotation and support member 50 and the tool magazine 40. A bottom end of the partition plate 12A is located below a top surface 40A of the tool magazine 40. The partition plate 12A extends in the X-axis direction. While the compressed air is transmitted from the blower nozzle 36 to the first securing mechanism 64 and the second securing mechanism 65, or while the compressed air is transmitted from the blower nozzle 36 to the grab portion 8g of the holding tool 8, the partition plate 12A suppresses the cutting powder from being scattered toward the tool magazine 40. When the processing tool 6 supported by the spindle 30 is to be replaced, the spindle 30 moves in the Y-axis direction over the partition plate 12A to be located above a predetermined processing tool 6 in the tool magazine 40.

As shown in FIG. 9, the controller 90 includes a first controller 91, a second controller 92, a third controller 93 and a fourth controller 94. The functions of these elements of the controller 90 may be implemented by a program. This program may be read from a recording medium such as a CD or a DVD. This program may be downloaded through the Internet. The functions of the elements of the controller 90 may be implemented by, for example, processor(s) and/or circuit(s). Specific control of each of the above-described elements of the controller 90 will be described later.

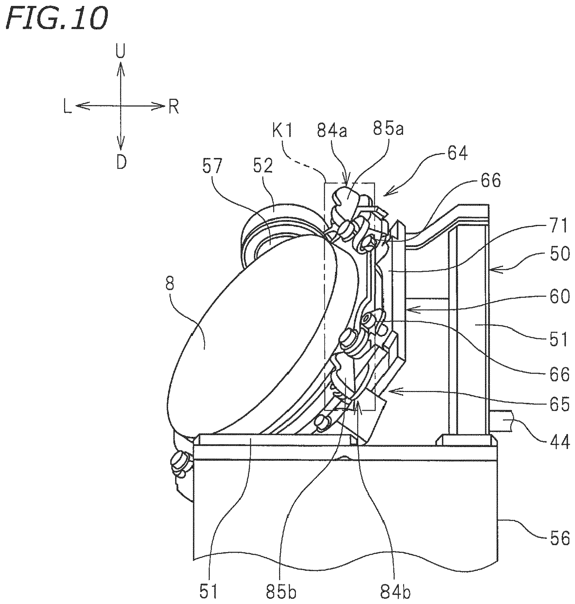

As shown in FIG. 10, the first controller 91 causes the rotation and holding member 60 to rotate to move the first securing mechanism 64 and the second securing mechanism 65 to a position above the rotation and support member 50, and in this state, causes the compressed air to be transmitted from the blower nozzle 36 to the first securing mechanism 64 (e.g., the first grab portion 85a of the first locking member 84a) and the second securing mechanism 65 (e.g., the second grab portion 85b of the second locking member 84b).

The second controller 92, while causing the rotation and support member 50 to move in the X-axis direction, causes the compressed air to be transmitted from the blower nozzle 36 to the first securing mechanism 64 (e.g., the first grab portion 85a of the first locking member 84a) and the second securing mechanism 65 (e.g., the second grab portion 85b of the second locking member 84b).

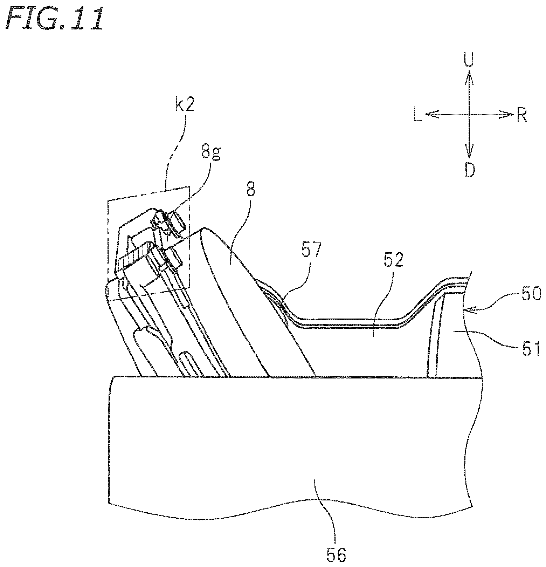

As shown in FIG. 11, the third controller 93 causes the rotation and holding member 60 to rotate to move the grab portion 8g of the holding tool 8 to a position above the rotation and support member 50, and in this state, causes the compressed air to be transmitted from the blower nozzle 36 to the grab portion 8g.

The fourth controller 94, while causing the rotation and support member 50 to move in the X-axis direction, causes the compressed air to be transmitted from the blower nozzle 36 to the grab portion 8g.

When the production of the dental prosthesis is finished and the holding tool 8 holding the processing target 5 is to be detached from the rotation and holding member 60, the compressed air may be transmitted as follows, for example. The first controller 91 and the second controller 92 may control such that the first securing mechanism 64 and the second securing mechanism 65 are moved to a position above the rotation and support member 50, and in this state, the compressed air is transmitted from the blower nozzle 36 to the first securing mechanism 64 and the second securing mechanism 65 while the rotation and support member 50 is moved rearward in the X-axis direction. As a result, the cutting powder is removed from the entirety of the region enclosed by the two-dot chain line K1 in FIG. 10. Then, for example, the third controller 93 and the fourth controller 94 may control such that the grab portion 8g of the holding tool 8 is moved to a position above the rotation and support member 50, and in this state, the compressed air is transmitted from the blower nozzle 36 to the grab portion 8g while the rotation and support member 50 is moved forward in the X-axis direction. As a result, the cutting powder is removed from the entirety of the region enclosed by the two-dot chain line K2 in FIG. 11.

As described above, in the production device 10 in this preferred embodiment, the blower nozzle 36 transmits the compressed air to the first securing mechanism 64 and the second securing mechanism 65, which are manually operable, among the components of the rotation and holding member 60. Therefore, when the production of the dental prosthesis is finished and the holding tool 8 holding the processing target 5 is to be detached from the rotation and holding member 60, the cutting powder, even if being attached to the first securing mechanism 64 or the second securing mechanism 65 of the rotation and holding member 60, is blown away by the compressed air transmitted from the blower nozzle 36. In this manner, the cutting powder is removed by the blower nozzle 36 provided in the production device 10. Therefore, the operator does not need to remove the cutting powder with a brush, which alleviates the working load on the operator. In addition, the cutting powder is suppressed from being attached to the hand of the operator while the operator manually operates the first securing mechanism 64 and the second securing mechanism 65.

With the production device 10 in this preferred embodiment, the blower nozzle 36 transmits the compressed air to the first locking member 84a and the second locking member 84b, which are manually rotated to be locked with the holding tool 8 and thus to secure the holding tool 8 to the holder main body 61 of the rotation and holding member 60. With such a structure, the cutting powder, even if being attached to the first locking member 84a or the second locking member 84b manually operable by the operator after the production of the dental prosthesis is finished, is blown away by the compressed air transmitted from the blower nozzle 36.

With the production device 10 in this preferred embodiment, the spindle 30 and the blower nozzle 36 are provided on the carriage 38 movable in the Z-axis direction and the Y-axis direction. With such a structure, there is no need to separately provide a mechanism that moves the blower nozzle 36. This simplifies the structure of, and control by, the production device 10.

With the production device 10 in this preferred embodiment, the first controller 91 causes the rotation and holding member 60 to rotate to move the first securing mechanism 64 and the second securing mechanism 65 to a position above the rotation and support member 50, and in this state, causes the compressed air to be transmitted from the blower nozzle 36 to the first securing mechanism 64 and the second securing mechanism 65. This shortens the distance between the blower nozzle 36 and each of the first securing mechanism 64 and the second securing mechanism 65. Therefore, the compressed air is transmitted from the blower nozzle 36 to the first securing mechanism 64 and the second securing mechanism 65 more effectively.

With the production device 10 in this preferred embodiment, the second controller 92, while causing the rotation and support member 50 to move in the X-axis direction, causes the compressed air to be transmitted from the blower nozzle 36 to the first securing mechanism 64 and the second securing mechanism 65. With such control, the compressed air is transmitted from the blower nozzle 36 to the first securing mechanism 64 and the second securing mechanism 65 at different angles. Therefore, the cutting powder attached to the first securing mechanism 64 or the second securing mechanism 65 is removed more effectively.

With the production device 10 in this preferred embodiment, the third controller 93 causes the rotation and holding member 60 to rotate to move the grab portion 8g of the holding tool 8 to a position above the rotation and support member 50, and in this state, causes the compressed air to be transmitted from the blower nozzle 36 to the grab portion 8g. This shortens the distance between the blower nozzle 36 and the grab portion 8g. Therefore, the compressed air is transmitted from the blower nozzle 36 to the grab portion 8g more effectively.

With the production device 10 in this preferred embodiment, the fourth controller 94, while causing the rotation and support member 50 to move in the X-axis direction, causes the compressed air to be transmitted from the blower nozzle 36 to the grab portion 8g of the holding tool 8. With such control, the compressed air is transmitted from the blower nozzle 36 to the grab portion 8g at different angles. Therefore, the cutting powder attached to the grab portion 8g is removed more effectively.

The production device 10 in this preferred embodiment includes the partition plate 12A located between the rotation and support member 50 and the tool magazine 40. Therefore, even if the cutting powder attached to the first securing mechanism 64 or the second securing mechanism 65 is blown away by the compressed air transmitted from the blower nozzle 36, the cutting powder is suppressed by the partition plate 12A from being scattered toward the tool magazine 40.

A preferred embodiment of the present invention is described above. The above-described preferred embodiment is merely an example, and the present invention may be carried out in any of various other embodiments.

In the above-described preferred embodiment, the blower nozzle 36 is provided on the first carriage 38A. The blower nozzle 36 is not limited to being provided on the first carriage 38A. The blower nozzle 36 may be provided on, for example, the second carriage 38B. In this case, the blower nozzle 36 is movable in the Z-axis direction in addition to in the Y-axis direction. Alternatively, the blower nozzle 36 may be secured to a predetermined position in the case main body 12, instead of being mounted on the carriage 38.

In the above-described preferred embodiment, the X axis extends in the front-rear direction and the Y axis extends in the left-right direction. Neither the X axis nor the Y axis is limited to extending in such a direction. For example, the X axis may extend in the left-right direction and the Y axis may extend in the front-rear direction.

## Claims

1. A dental prosthesis production device (10), comprising:
a processing tool (6) that is configured to cut a processing target (5) to produce a dental prosthesis;
a spindle (30) that is configured to rotatably support the processing tool (6) and is movable in an XYZ orthogonal coordinate system;
a holding tool (8) that is configured to hold the processing target (5);
a rotation and holding member (60) that is configured to detachably hold the holding tool (8) and is rotatable about an X axis; and
a blower nozzle (36) that is located above the rotation and holding member (60) and is configured to transmit compressed air to the rotation and holding member (60) and the holding tool (8);
wherein:
the rotation and holding member (60) includes:
a holder main body (61) that is configured to hold the holding tool (8); and
a securing mechanism (64, 65) that is manually operable and is configured to secure the holding tool (8) to the holder main body (61); and
the blower nozzle (36) is configured to transmit the compressed air to the securing mechanism (64, 65).

2. The dental prosthesis production device (10) according to claim 1, wherein:
the securing mechanism (64, 65) includes:
a shaft (81a, 81b) provided on the holder main body (61);
an arm member (82a, 82b) that has one of two ends thereof provided around the shaft (81a, 81b) and is rotatable about the shaft (82a, 82b); and
a locking member (84a, 84b) that is provided on the other of the two ends of the arm member (82a, 82b) and is manually rotatable to be locked with the holding tool (8) and thus to secure the holding tool (8) to the holder main body (61); and
the blower nozzle (36) is configured to transmit the compressed air to the locking member (84a, 84b).

3. The dental prosthesis production device (10) according to claim 1 or 2, further comprising a carriage (38) on which the spindle (30) and the blower nozzle (36) are provided and which is movable in a Z-axis direction and a Y-axis direction.

4. The dental prosthesis production device (10) according to any one of claims 1 through 3, further comprising:
a rotation and support member (50) that is configured to support the rotation and holding member (60) such that the rotation and holding member (60) is rotatable about the X axis, the rotation and support member (50) being rotatable about a Y axis and movable in an X-axis direction;
a first driving source (55) that is provided on the rotation and support member (50) to rotate the rotation and holding member (60);
a movement mechanism (80) that is configured to move the rotation and support member (50) in the X-axis direction;
a second driving source (79) that is configured to move the movement mechanism (80); and
a controller (90) that is configured to control the first driving source (55) and the second driving source (79);
wherein the controller (90) includes a first controller (91) that is configured to cause the rotation and holding member (60) to rotate to locate the securing mechanism (64, 65) above the rotation and support member (50), and in this state, to cause the compressed air to be transmitted from the blower nozzle (36) to the securing mechanism (64, 65).

5. The dental prosthesis production device (10) according to claim 4, wherein the controller (90) includes a second controller (92) that, while causing the rotation and support member (50) to move in the X-axis direction, is configured to cause the compressed air to be transmitted from the blower nozzle (36) to the securing mechanism (64, 65).

6. The dental prosthesis production device (10) according to claim 4 or 5, wherein:
the blower nozzle (36) is configured to transmit the compressed air to a grab portion (8g) of the holding tool (8) held by the rotation and holding member (60), the grab portion (8g) being located opposite to the securing mechanism (64, 65) with respect to a rotation shaft (57, 58) of the rotation and holding member (60), the grab portion (8g) being to be grabbed by hand; and
the controller (90) includes a third controller (93) that is configured to cause the rotation and holding member (60) to rotate to locate the grab portion (8g) above the rotation and support member (50), and in this state, to cause the compressed air to be transmitted from the blower nozzle (36) to the grab portion (8g).

7. The dental prosthesis production device (10) according to claim 6, wherein the controller (90) includes a fourth controller (94) that, while causing the rotation and support member (50) to move in the X-axis direction, is configured to cause the compressed air to be transmitted from the blower nozzle (36) to the grab portion (8g).

8. The dental prosthesis production device (10) according to any one of claims 4 through 7, further comprising:
a tool magazine (40) that is provided between the movement mechanism (80) and the rotation and support member (50), and is configured to accommodate a plurality of the processing tools (6); and
a partition plate (12A) located between the rotation and support member (50) and the tool magazine (40).
